# EUROPÄISCHE PATENTANMELDUNG

(11) **EP 2 298 527 A1**
(43) Veröffentlichungstag der Anmeldung: **23.03.2011**
(21) Anmeldenummer: 09011781.3
(22) Anmeldetag: 16.09.2009
(51) Int. Cl.: B29C 45/14, B29C 43/18, B65D 51/00, A61J 1/14

(54) **Verfahren zur Herstellung eines Stopfens**

(71) Anmelder: Lonstroff AG, 5001 Aarau (CH)
(72) Erfinder: Werner, Erni, 6233 Büron (CH)
(74) Vertreter: Schaad, Balass, Menzl & Partner AG

(57) **Zusammenfassung**

Verfahren zur Herstellung eines einstückigen Stopfens (12) mit einem Trägerkörper (104) aus einem elastomeren Werkstoff und einer inerten Schicht (34), wobei der Trägerkörper (104) einen tellerförmigen Aussenabschnitt (62) und einen zapfenartig gegenüber dem Aussenabschnitt (62) vorstehenden Innenabschnitt (30) aufweist. Der Innenabschnitt (30) wird unter Einwirkung von Wärme in einem Formwerkzeug (10) aus einer Platte (26) des elastomeren Werkstoffs und einem Inertfilms (28) geformt und anschliessend ausgestanzt. Der Aussenabschnitt (62) wird mittels Spritzgiessen an den Innenabschnitt (30) angespritzt, wodurch der Stopfen (12) seine endgültige Form erhält.

## Beschreibung

Die vorliegende Erfindung betrifft ein Verfahren zur Herstellung eines Stopfens zum Verschliessen eines Behälters, insbesondere zum Verschliessen eines Medikamentenbehälters.

Zum Abdichten und Verschliessen von Behältern, welche insbesondere für die Aufbewahrung von Medikamenten verwendet werden, werden Stopfen unterschiedlicher Form und aus unterschiedlichen Werkstoffen eingesetzt. In der Regel bestehen solche Stopfen aus natürlichem oder synthetischem Gummi oder aus gummielastischen oder reinen Thermoplasten. Diese Werkstoffe werden nachstehend kurz als "elastomere Werkstoffe" zusammengefasst.

Die elastischen Eigenschaften solcher Stopfen aus elastomeren Werkstoffen sind insbesondere bei Medikamentenflaschen, Spritzenzylindern oder anderen, häufig aus Glas bestehenden Behältern besonders vorteilhaft, da sie einerseits erlauben, die Toleranz von solchen Flaschenmündungen bzw. Spritzenzylindern auszugleichen und es anderseits auch möglich ist, den Stopfen mittels einer Kanüle zu durchstechen und so den Behälterinhalt zu entnehmen oder in den Behälter einzufüllen. Die Stopfen gewährleisten eine über einen längeren Zeitraum gute, sichere Abdichtung des Behälters.

Die in Medikamentenflaschen, Spritzenzylindern oder ähnlichen Behältern aufzubewahrenden, in der Regel flüssigen oder pulverförmigen pharmazeutischen Zubereitungen stellen sehr unterschiedliche Anforderungen an das zu verwendende Stopfenmaterial. Beispielsweise ist die chemische und/oder biologische Verträglichkeit mit dem Flascheninhalt gefordert. Ausserdem ist bei sauerstoffoder feuchtigkeitsempfindlichen Flascheninhalten die Gasoder Wasserdampfdichtigkeit des Verschlussstopfens wesentlich. Weiterhin darf das Stopfenmaterial keine Veränderung des therapeutischen Wertes des Behälterinhalts verursachen, z. B. dadurch, dass er schädliche oder ein pharmazeutisches Präparat verändernde Inhaltsstoffe abgibt bzw. Bestandteile aus der pharmazeutischen Zubereitung aufnimmt.

Die oben aufgezeigten Probleme gelten gleichermassen auch für Kolben von Spritzenzylindern, Spritzenampullen und/oder Zweikammer-Spritzampullen.

EP 0 148 426 offenbart pharmazeutische Stopfen zum Verschliessen bzw. Unterteilen eines Behälters, welche sowohl eine gute Dichtigkeit gewährleisten, als auch eine Wechselwirkung zwischen dem Stopfenmaterial und dem Behälterinhalt zuverlässig vermeiden. Die Stopfen gemäss EP 0 148 426 bestehen im Wesentlichen aus Gummi und weisen einen in Gebrauchsstellung dem Behälterinhalt zugewandten, von einem Inertfilm kappenförmig umschlossenen Bereich auf. In einem nicht beschichten, an den Inertfilm angrenzenden Bereich liegt der Stopfenhals unmittelbar an der Wand der Behälteröffnung an. Bei einem solchen Stopfen kann der Behälterinhalt praktisch nur mit dem Inertfilm in Kontakt kommen, während der unbeschichtete Bereich des Stopfenhalses mit seinem gummielastischen Werkstoff an der Innenwand des Behälters für eine gute Abdichtung sorgt.

EPO 148 426 offenbart zudem ein Verfahren zur Herstellung der oben beschriebenen Stopfen. Dabei wird eine Gummifolie, auf welche z. B. zuvor ein fluorierter Polymerfilm auflaminiert wurde, als zunächst ebener Verbund in ein Formwerkzeug gebracht und dort mittels Druck und Wärme - beispielsweise in einem Tiefziehverfahren - in die für das innere Stopfenteil vorgesehene Form verformt. Dadurch verbindet sich der Polymerfilm fest mit der Gummifolie und letztere wird mindestens teilweise vulkanisiert. Im zweiten Arbeitsschritt werden die inneren Stopfenteile aus dem Formwerkzeug entfernt und ausgestanzt. Anschliessend werden die Stopfenaussenteile mit den inneren Stopfenteilen in ein zweites Formwerkzeug eingelegt und dort geformt, zusammen ausvulkanisiert und miteinander verbunden. Die fertigen Stopfen werden durch ein erneutes Ausstanzen gewonnen.

Das obige Verfahren zur Herstellung von Stopfen hat den Nachteil, dass es relativ aufwändig ist und viele Arbeitsschritte umfasst. Es ist daher eine Aufgabe der vorliegenden Erfindung, ein effizienteres Verfahren zur Herstellung von Stopfen zur Verfügung zu stellen.

Die Aufgabe wird gelöst durch das Verfahren gemäss Anspruch 1. Bevorzugte Ausführungsformen werden in den abhängigen Ansprüchen beansprucht.

Das erfindungsgemässe Verfahren dient der zur Herstellung eines einstückigen Stopfens mit einem Trägerkörper aus einem elastomeren Werkstoff und einer inerten Schicht, der dazu bestimmt ist, einen Behälter mit einer Öffnung, insbesondere mit einer im Wesentlichen kreisförmigen Öffnung, zu verschliessen. Der Trägerkörper des Stopfens weist einen tellerförmigen Aussenabschnitt und einen fest mit dem Aussenabschnitt verbundenen, zapfenartig gegenüber dem Aussenabschnitt vorstehenden Innenabschnitt mit einem vom Aussenabschnitt abgewandten freien Ende auf. Vorzugsweise weisen der Aussenabschnitt und der Innenabschnitt eine gemeinsame Mittelachse auf. Der Aussenabschnitt ist dazu bestimmt, an der Aussenseite des Behälters aufzuliegen, und der Innenabschnitt ist dazu bestimmt, mit dem freien Ende voran in die Öffnung des Behälters eingesetzt zu werden und ins Innere des Behälters hineinzuragen. Die Oberfläche des Innenabschnitts ist zumindest teilweise mit der inerten Schicht überzogen, so dass ein Kontakt des Trägerkörpers mit dem Inhalt des Behälters zumindest annähernd vollständig vermieden werden kann.

Das Verfahren zur Herstellung umfasst, analog zum Verfahren gemäss EP 0 148 426, die folgenden Schritte:
(a) Einlegen einer Platte des elastomeren Werkstoffs und eines Inertfilms in ein Formwerkzeug,
(b) Formen des Innenabschnitts unter Einwirkung von Wärme, so dass der Inertfilm die inerte Schicht bildet und das freie Ende des Innenabschnitts und einen angrenzenden Bereich überzieht, wobei der elastomere Werkstoff zumindest teilweise vulkanisiert und mit dem Inertfilm untrennbar verbunden wird und wobei ein Fell gebildet wird,
(c) Entfernen des Fells aus dem Formwerkzeug,
(d) Ausstanzen des Innenabschnitts aus dem Fell, und
(e) Anbringen des Aussenabschnitts in einem weiteren Werkzeug.
   Das erfindungsgemäss Verfahren ist **dadurch gekennzeichnet, dass** zum Anbringen des Aussenabschnitts
(e1) der Innenabschnitt derart in eine Kavität eines Spritzgusswerkzeugs eingelegt wird, dass ein dem freien Ende gegenüberliegendes Anspritzende in der Kavität freiliegt,
(e2) der Aussenabschnitt mittels Spritzgiessen an das Anspritzende des Innenabschnitts angespritzt wird, wodurch der Stopfen seine endgültige Form erhält, und
(e3) der ausvulkanisierte oder zumindest teilausgehärtete Stopfen aus dem Spritzgusswerkzeug entfernt wird.

Durch das erfindungsgemässe Verfahren kann das Anbringen des Aussenabschnitts am Innenabschnitts wesentlich vereinfacht werden: Während beim Verfahren gemäss EP 0 148 426 zwei weitere formgebende Arbeitsschritte - Tiefziehen und Ausstanzen - notwendig sind, wird der Aussenabschnitt beim erfindungsgemässen Verfahren in einem einzigen Spritzgussvorgang vollständig ausgeformt und mit dem Innenabschnitt verbunden. Die Anzahl der Arbeitsschritte konnte somit reduziert werden und das Herstellungsverfahren kürzer, weniger aufwändig und effizienter gestaltet werden.

Die Platte des elastomeren Werkstoffs, welche in Schritt (a) in das Formwerkzeug eingelegt wird, ist nicht vollständig ausvulkanisiert, d.h. sie ist teil- oder unvulkanisierten. Vorzugsweise ist die Platte unvulkanisiert.

In einer bevorzugten Ausführungsform wird der Trägerkörper des Stopfens aus einem natürlichen oder synthetischen Kautschuk-Werkstoff hergestellt. Die Verwendung eines Kautschuk-Werkstoffs für den Trägerkörper garantiert eine optimale Dichtfunktion des Stopfens. Vorzugsweise wird als elastomerer Werkstoff Brombutyl-Kautschuk, Nitrilkautschuk (NBR) oder Ethylen-Propylen-Dien-Kautschuk (EPDM), insbesondere Brombutyl-Kautschuk verwendet. Diese Materialien sind besonders geeignet, da sie gasdicht und chemisch relativ inert sind.

In einer bevorzugten Ausführungsform wird als Inertfilm ein fluorierter Polymerfilm verwendet. Fluorierte Polymerfilme sind chemisch sehr inert und widerstandsfähig und können daher eine Wechselwirkung zwischen Behälterinhalt und Stopfenmaterial verhindern. Dadurch wird eine Beeinträchtigung des Behälterinhalts vermieden, was insbesondere bei pharmazeutischen Zubereitungen von grosser Wichtigkeit ist. Vorzugsweise werden fluorierte Polymerfilme aus Polytetrafluorethylen (Teflon®, PTEF), Tetrafluorethylen-Perfluoropropylen-Copolymer FEP), Perfluoralkoxy-Copolymer (PFA), Ethylen-Tetrafluorethylen-Copolymer (ETFE), Polyvinylidenfluorid (PVDF) oder Polyvinylfluorid (PVF) verwendet, insbesondere ein Teflonfilm.

In einer bevorzugten Ausführungsform wird der Innenabschnitt in Schritt (b) bei einer Temperatur von 120 °C bis 250 °C geformt, vorzugsweise bei einer Temperatur von 150 °C bis 200 °C, insbesondere bei etwa 180 °C. Die Wärme wird bevorzugt durch das Formwerkzeug übertragen. Vorzugsweise wird in Schritt (b) zusätzlich ein Druck auf die Platte des elastomeren Werkstoffs und den Inertfilm ausgeübt.

In einer bevorzugten Ausführungsform wird in Schritt (b) die inerte Schicht derart geformt, dass sie die Aussenfläche des beim fertigen Stopfen gegenüber dem Aussenabschnitt vorstehenden Innenabschnitts vollständig überzieht. Damit ist beim fertigen Stopfen also der gesamte Abschnitt, welcher in die Öffnung des Behälters eingeführt wird, mit der inerten Schicht überzogen und der Behälterinhalt kommt in keinerlei Kontakt mit dem Material des Trägerkörpers. Auf diese Art und Weise kann eine Beeinträchtigung des Behälterinhalts durch den Stopfen vollständig vermieden werden.

In einer bevorzugten Ausführungsform wird in Schritt (b) an einer am freien Ende des Innenabschnitts liegenden Stirnseite eine Vertiefung ausgebildet. Dadurch wird die Dicke des Stopfens im Bereich der Vertiefung reduziert, so dass er leichter mit einer Kanüle durchstochen werden kann. Zudem kann durch eine solche Vertiefung am freien Ende des Innenabschnitts eine elastische Dichtlippe gebildet werden, welche die Dichtfunktion des Stopfens zusätzlich verbessert.

In einer bevorzugten Ausführungsform wird in Schritt (b) in einer am Anspritzende des Innenabschnitts liegenden, stirnseitigen Endfläche eine zur Endfläche hin offene, umlaufende Ringnut gebildet. Durch diese Ringnut wird die Kontaktfläche zwischen Innen- und Aussenabschnitt vergrössert und dadurch die Haftung des Aussenabschnitts an der stirneseitigen Endfläche des Innenabschnitts verbessert.

In einer bevorzugten Ausführungsform wird der Innenabschnitt in Schritt (e1) derart in die Kavität des Spritzgusswerkzeugs eingelegt, dass ein an das Anspritzende angrenzender Bereich freiliegt. Durch diese Anordnung in der Kavität wird während des Spritzgiessens nicht nur das Anspritzende des Innenabschnitts axial angespritzt, sondern auch der daran angrenzende, freiliegende, mantelseitige Bereich in radialer Richtung. Dadurch wird wiederum die Kontaktfläche zwischen Innenund Aussenabschnitt vergrössert und die Haftung des Aussenabschnitts am Innenabschnitt verbessert.

In einer bevorzugten Ausführungsform wird in Schritt (e1) der Innenabschnitt derart in die Kavität des Spritzgusswerkzeugs eingelegt, dass nur derjenige Bereich am Anspritzende des Innenabschnitts freiliegt, welcher nicht mit der inerten Schicht überzogen ist, d.h. derjenige Bereich, der frei ist von der inerten Schicht. Auf diese Art und Weise wird die Kontaktfläche zwischen den beiden, zum Innen- bzw. Aussenabschnitt gehörenden Teilen des Trägerkörpers maximiert und gleichzeitig verhindert, dass der Trägerkörper selbst beim Gebrauch mit dem Behälterinhalt in Kontakt kommt.

In einer weiteren bevorzugten Ausführungsform wird im Spritzgusswerkzeug vor dem Anspritzen des Aussenabschnitts ein Unterdruck produziert. Durch den Unterdruck wird vor dem Spritzgiessen möglichst viel Luft aus der Kavität des Spritzgusswerkzeugs entfernt und der Einspritzvorgang erleichtert. Vorzugsweise wird das Spritzgusswerkzeug zu diesem Zweck mittels einer externen Einrichtung über einen Unterdruckkanal, welcher mit der Kavität verbunden ist, evakuiert. Damit die Luft bis unmittelbar vor dem Einspritzvorgang ausgebracht werden kann, weist das Spritzgusswerkzeug vorzugsweise ein Schliessventil auf, welches durch das Spritzgut selbst in Schliessstellung gebracht wird und ein Eindringen des Spritzguts in den Unterdruckkanal beim Einspritzvorgang verhindert. Das Produzieren eines Unterdrucks im Spritzgusswerkzeug dient ausserdem dazu, den Einschluss von Luftblasen im angespritzten Aussenabschnitt zu vermeiden und so die Produktqualität zu verbessern.

In einer bevorzugten Ausführungsform wird in Schritt (e2) zum Anspritzen des Aussenabschnitts ein Einspritzdruck von 800 bis 1'400 bar, vorzugsweise von 1'000 bis 1'200 bar, insbesondere von etwa l'100 bar verwendet.

Die vorliegende Erfindung wird anhand der in der nachfolgenden Zeichnung gezeigten schematischen SchnittDarstellungen weiter veranschaulicht. Es zeigen:
- Fig. 1: ein Formwerkzeug in Offenstellung;
- Fig. 2: das Einlegen einer Platte eines elastomeren Werkstoffs und eines Inertfilms in das Formwerkzeug;
- Fig. 3: das Formen des Innenabschnitts aus dem elastomeren Werkstoff und dem Inertfilm im Formwerkzeug;
- Fig. 4: das Entfernen des Fells aus dem Formwerkzeug;
- Fig. 5: das Einlegen des Fells in ein Stanzwerkzeug;
- Fig. 6: das Schliessen des Stanzwerkzeugs;
- Fig. 7: das Ausstanzen des Innenabschnitts;
- Fig. 8: ein Spritzgusswerkzeug in Offenstellung;
- Fig. 9: das Einlegen des Innenabschnitts in eine Kavität des Spritzgusswerkzeugs;
- Fig. 10: das Anspritzen des Aussenabschnitts;
- Fig. 11: einen nach dem erfindungsgemässen Verfahren hergestellten Stopfen;
- Fig. 12: einen Behälter mit einem mithilfe des erfindungsgemässen Verfahrens hergestellten Stopfen.

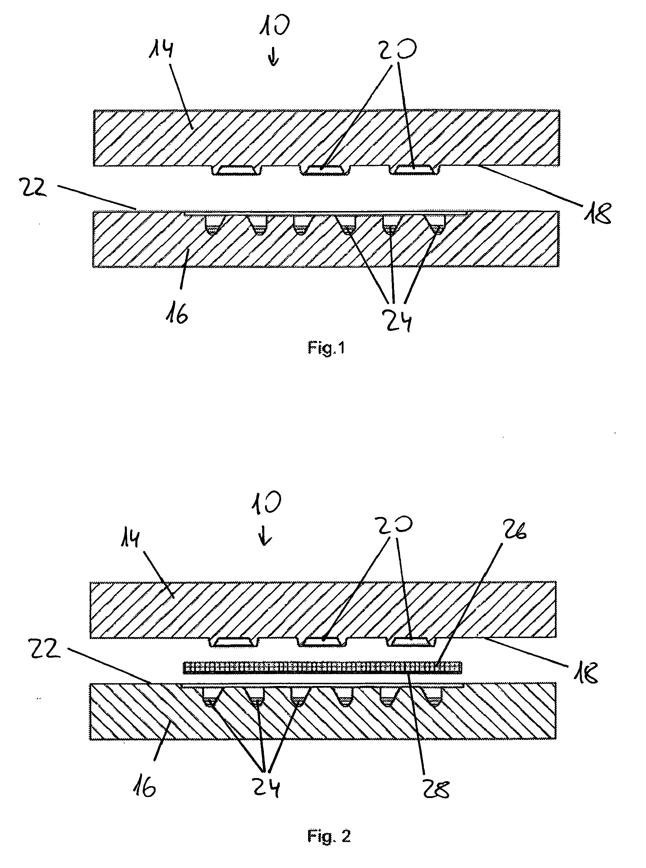

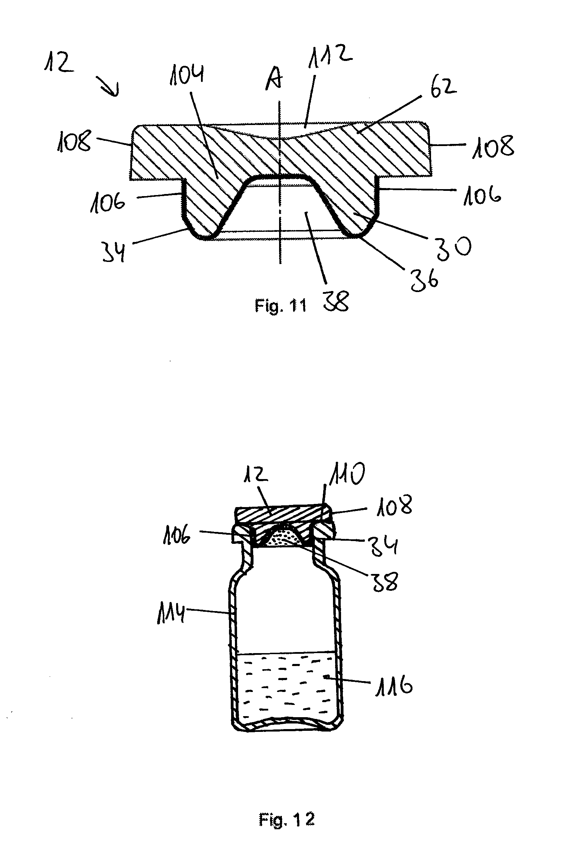

Figur 1 zeigt schematisch einen Schnitt durch ein Formwerkzeug 10 in Offenstellung, welches im erfindungsgemässen Verfahren für die Herstellung eines Stopfens 12 (vgl. Figur 11) eingesetzt werden kann. Das Formwerkzeug 10 weist eine erste Formplatte 14 und eine parallel dazu angeordnete zweite Formplatte 16 auf. Die beiden Formplatten 14 und 16 sind normal zu den Plattenebenen gegeneinander beweglich. Die erste Formplatte 14 weist auf ihrer der zweiten Formplatte 16 zugewandten Seite 18 erste Formmulden 20 auf. Die zweite Formplatte 16 weist auf ihrer der ersten Formplatte 14 zugewandten Seite 22 zweite Formmulden 24 auf. Die einzelnen ersten Formmulden 20 sind so angeordnet, dass sie bei Verwendung des Formwerkzeugs 10 mit den zweiten Formmulden 24 zusammenwirken können. Insbesondere ist jeweils eine erste Formmulde 20 einer zweiten Formmulde 24 zugeordnet und in normaler Richtung zu den Plattenebenen übereinander angeordnet.

Der in Figur 2 dargestellte Schnitt zeigt schematisch den ersten Schritt (a) des erfindungsgemässen Verfahrens, gemäss welchem eine Platte 26 eines elastomeren Werkstoffs und ein Inertfilm 28 in das Formwerkzeug 10 eingelegt werden. Dabei werden die elastomere Platte 26 und der Inertfilm 28 parallel zueinander zwischen den beiden Formplatten 14 und 16 angeordnet. Die elastomere Platte 26 und der Inertfilm 28 können vor dem Einlegen miteinander verbunden werden, beispielsweise durch Auflaminieren des Inertfilms 28 auf die Platte 26 des elastomeren Werkstoffs. Alternativ ist es aber auch möglich, dass Platte 26 und Inertfilm 28 separat in das Formwerkzeug 10 eingelegt werden. Die elastomere Platte 26 wird in Schritt (a) zwischen der ersten Formplatte 14 und dem Inertfilm 28 angeordnet, und der Inertfilm 28 zwischen der zweiten Formplatte 16 und der elastomeren Platte 26.

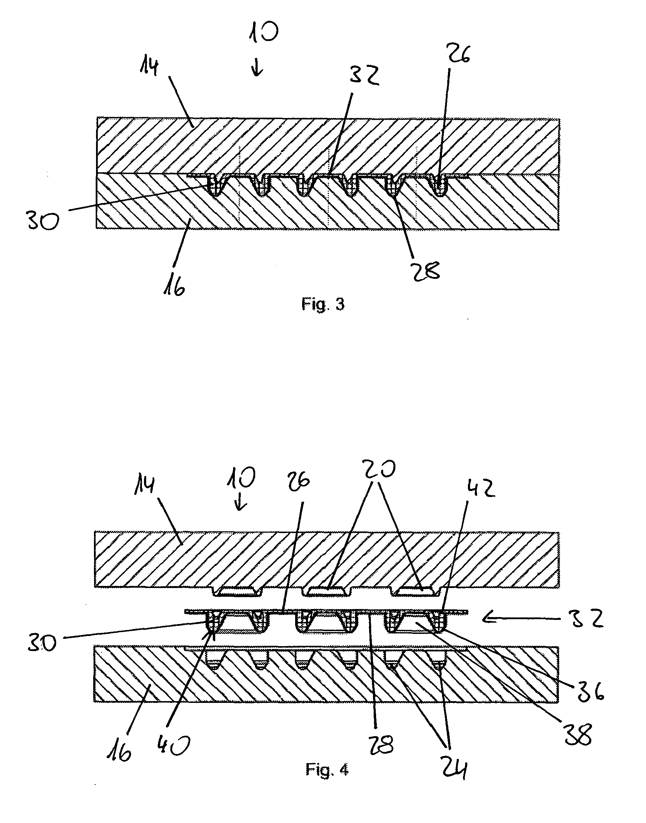

In Figur 3 ist schematisch das Formen eines Innenabschnitts 30 (vgl. Figur 11) gemäss Schritt (b) des erfindungsgemässen Verfahrens dargestellt. Zu diesem Zweck wird das Formwerkzeug 10 um die Platte 26 des elastomeren Werkstoffs und den Inertfilm 28 herum geschlossen, indem die erste und zweite Formplatte 14, 16 gegeneinander bewegt werden, so dass die elastomere Platte 26 und der Inertfilm 28 gemeinsam in die Formmulden 20 und 24 gedrückt werden. Unter Einwirkung von Wärme wird so ein Fell 32 mit mehreren zapfenartigen Innenabschnitten 30 gebildet, wobei der elastomere Werkstoff zumindest teilweise vulkanisiert und mit dem Inertfilm 28 verbunden wird. Der Inertfilm 28 bildet dabei eine inerte Schicht 34 (vgl. Figur 11), welche die Innenabschnitte auf der der zweiten Formplatte 16 zugewandten Seite überzieht.

Figur 4 zeigt schematisch einen Schnitt durch das Formwerkzeug 10, zum Zeitpunkt als das Fell 32 daraus entfernt wird. Zu diesem Zweck wird das Formwerkzeug 10 wiederum in eine Offenstellung gebracht, so dass das Fell 32 aus den Formmulden 20 und 24 herausgelöst werden kann. Die zapfenartigen Innenabschnitte 30, welche Teil des Fells 32 sind, weisen auf der der zweiten Formplatte 16 zugewandten Seite des Fells je ein freies Ende 36 mit einer Vertiefung 38 auf, welche in der am freien Ende 36 liegenden Stirnseite 40 ausgebildet ist. Die Innenabschnitte 30 weisen ausserdem je ein Anspritzende 42 auf, welches dem freien Ende 36 gegenüberliegt. In der am Anspritzende 42 des Innenabschnitts 30 liegenden, stirnseitigen Endfläche ist zudem eine zur Endfläche hin offene, umlaufende Ringnut 44 ausgebildet.

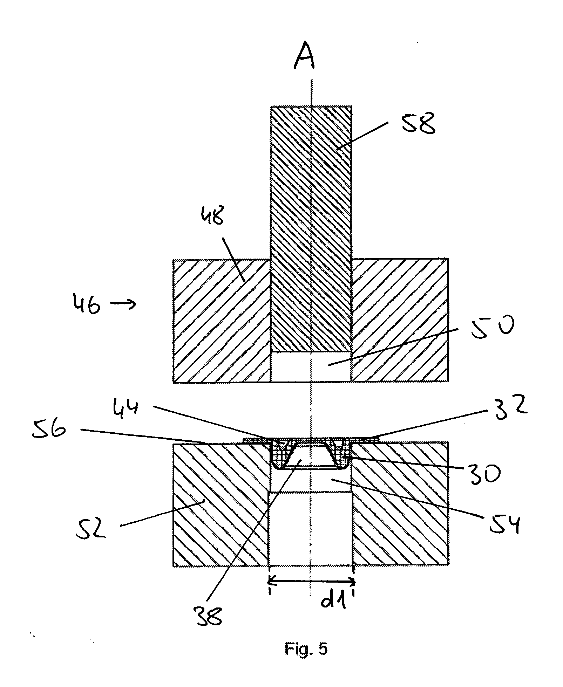

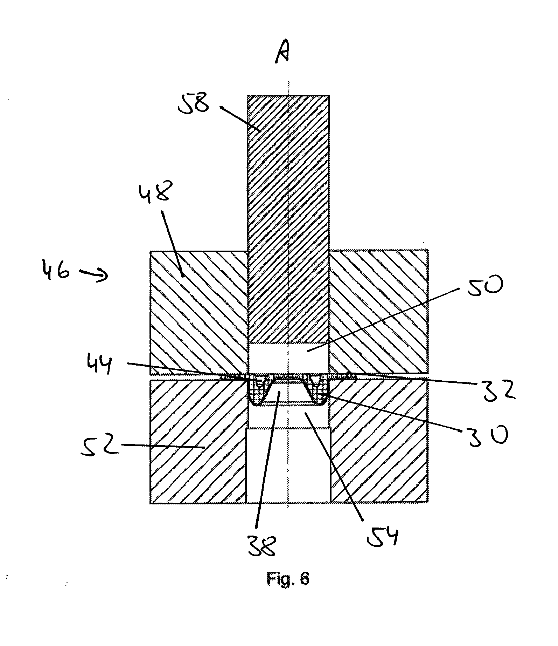

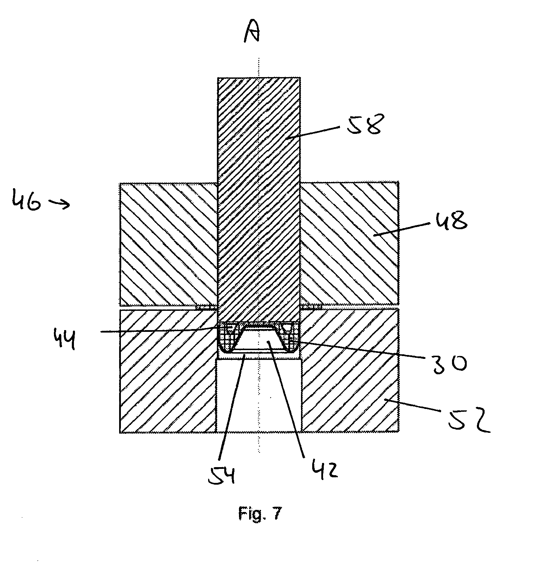

In Schritt (d) des erfindungsgemässen Verfahrens werden nun die Innenabschnitte 30 aus dem Fell 32 ausgestanzt. Dieser Vorgang ist schematisch in Schnitt-Darstellung in den Figuren 5 bis 7 gezeigt: Das Fell 32 (oder ein Teil davon) wird in ein Stanzwerkzeug 46 eingelegt (Figur 5), das Stanzwerkzeug 46 geschlossen (Figur 6) und der Innenabschnitt 30 ausgestanzt (Figur 7).

Das Stanzwerkzeug 46 weist eine erste Stanzplatte 48 mit einer ersten Aussparung 50 und eine parallel zur ersten Stanzplatte 48 angeordnete, zweite Stanzplatte 52 mit einer zweiten Aussparung 54 auf, wobei die beiden Stanzplatten 48 und 52 normal zur Plattenebene beweglich sind. Die beiden kreiszylinderförmigen Aussparungen 50 und 54 verlaufen normal zur Plattenebene, weisen denselben Durchmesser d1 auf und sind derart angeordnet, dass sie bei geschlossenem Stanzwerkzeug 46 einen fortlaufenden Hohlraum bilden. Die zweite Stanzplatte 52 weist auf ihrer der ersten Stanzplatte 48 zugewandten Seite eine Auflagefläche 56 auf. Das Fell 32 wird derart auf die Auflagefläche 56 gelegt, dass der Innenabschnitt 30 mit dem freien Ende 36 voran in die zweite Aussparung 54 hineinragt. Der aus dem Fell 32 in die zweite Aussparung 54 herausragende, zapfenförmige Bereich ist im Wesentlichen kreiszylinderförmig, besitzt eine Mittelachse A und weist vorzugsweise zumindest annähernd denselben Durchmesser d1 wie die beiden Aussparungen 50 und 54 auf.

Das Stanzwerkzeug 46 weist im Weiteren einen kreiszylinderförmigen Stanzkolben 58 auf, welcher entlang der Mittelachse A normal zu den Plattenebenen beweglich ist. Der Stanzkolben 58 ist vor dem eigentlichen Stanzvorgang in der ersten Aussparung 50 angeordnet und besitzt einen im Vergleich zu d1 etwas kleineren, beispielsweise 0.01 bis 0.03 mm kleineren, Durchmesser. Vor dem Ausstanzen wird das Fell 32 zwischen den beiden Stanzplatten 48 und 52 eingeklemmt und so fixiert. Zum Ausstanzen wird der Stanzkolben 58 durch die erste Aussparung 50 in die zweite Aussparung 54 hineingepresst und durchtrennt dabei das Fell 32 entlang des äusseren Umfangs des Innenabschnitts 30.

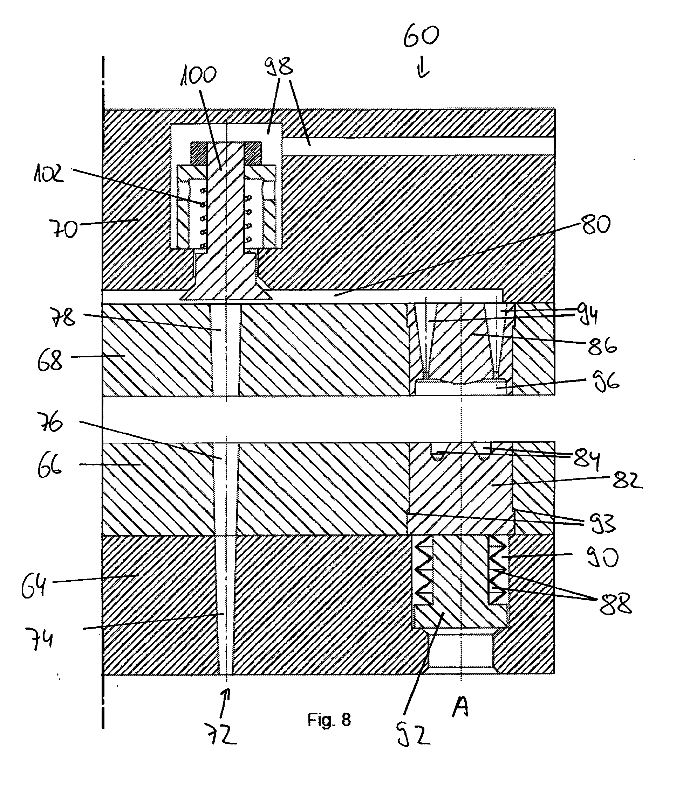

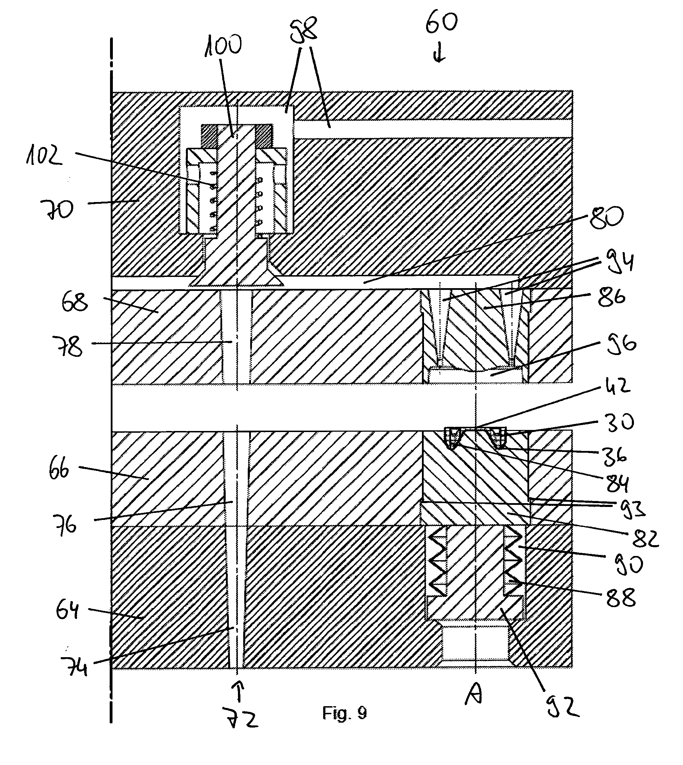

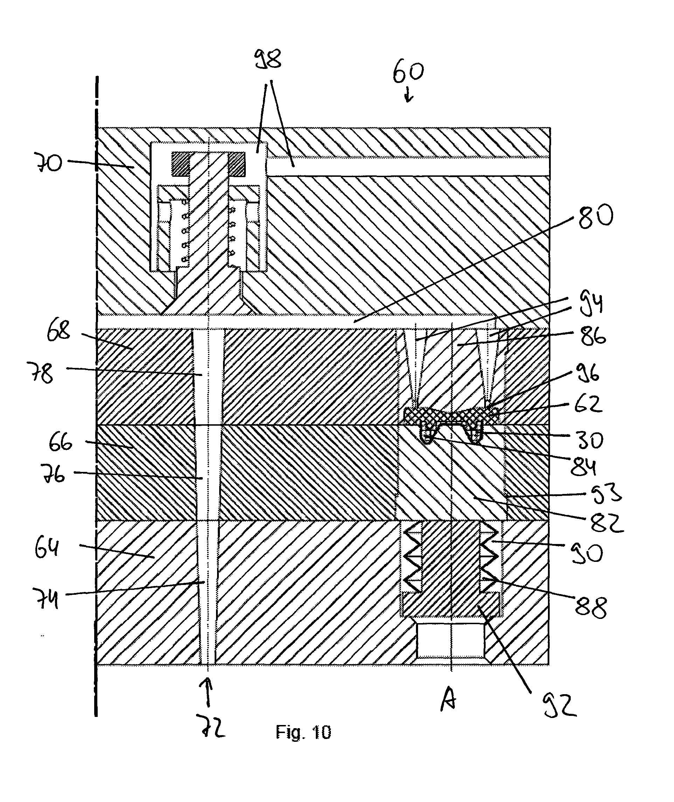

Die Figuren 8 bis 10 zeigen einen schematischen Schnitt durch ein Spritzgusswerkzeug 60, welches beim erfindungsgemässen Verfahren zum Anspritzen eines Aussenabschnitts 62 (vgl. Figur 11) verwendet werden kann. Figur 8 zeigt das Spritzgusswerkzeug 60 in Offenstellung, Figur 9 das Einlegen des Innenabschnitts 30 ins Spritzgusswerkzeug 60, und Figur 10 das eigentliche Anspritzen des Aussenabschnitts 62.

Das Spritzgusswerkzeug 60 weist eine erste äussere Platte 64, eine erste innere Platte 66, eine zweite innere Platte 68 und eine zweite äussere Platte 68 auf, welche allesamt parallel zueinander angeordnet sind und normal zu den Plattenebenen beweglich sind. Die beiden inneren Platten 66 und 68 sind zwischen den äusseren Platten 64 und 70 angeordnet. In der in Figur 8 gezeigten Offenstellung sind die erste äussere Platte 64 und die erste innere Platte 66 fest miteinander verbunden dies bleibt auch während des gesamten Verfahrens so. Die erste innere Platte 66 ist, in der in Figur 8 gezeigten Offenstellung, von der zweiten inneren Platte 68 beabstandet. Die erste innere Platte 66 und die erste äussere Platte 64 sind stationär mit dem Spritzgusswerkzeug 60 verbunden. Die zweite innere Platte 68 und die zweite äussere Platte 70 können jedoch relativ zueinander bewegt und ebenfalls von der ersten inneren Platte 66 und der ersten äusseren Platte 64 wegbewegt werden, insbesondere während des Ausformvorgangs. Während dem Spritzgussvorgang sind die zweite innere Platte 68 und die zweite äussere Platte 70 aufeinander gepresst und das Spritzgusswerkzeug 60 geschlossen.

Durch die erste äussere Platte 64 und die beiden inneren Platten 66 und 68 hindurch verläuft ein Zuführkanal 72 zum Zuführen des Spritzguts, welcher sich aus den drei jeweils in einer der drei Platten 64, 66 und 68 angeordneten Zuführkanalabschnitten 74, 76 und 78 zusammensetzt. Rechtwinklig zum Zuführkanal 72, zwischen der zweiten inneren Platte 68 und der zweiten äusseren Platte 70 verläuft mindestens ein, vorzugsweise flächiger, Verteilkanal 80, durch welchen das Spritzgut zu den Kavitäten des Spritzgusswerkzeugs 60 geleitet werden kann.

In die erste innere Platte 66 ist ein auswechselbarer erster Formeinsatz 82 eingebracht, welcher eine erste, zur zweiten inneren Platte 68 hin offene Teilkavität 84 aufweist. In die zweite innere Platte 68 ist ein auswechselbarer zweiter Formeinsatz 86 eingebracht, welcher eine zweite, zur ersten inneren Platte 66 hin offene Teilkavität 84 aufweist. Die erste Teilkavität 84 und die zweite Teilkavität 96 sind entlang einer normal zu den Plattenebenen verlaufenden Mittelachse A angeordnet und bilden, wenn das Spritzgusswerkzeug 60 geschlossen ist, die Kavität des Spritzgusswerkzeugs 60. Der erste Formeinsatz 82 wird in der ersten inneren Platte 66 durch Tellerfedern 88 vorgespannt, welche in einen Hohlraum 90 in der ersten inneren Platte 66 eingesetzt sind und um einen entlang der Mittelachse A verlaufenden Führzylinder 92 herum angeordnet sind. Der erste Formeinsatz 82 liegt dabei mittels aussen liegenden radialen Schultern 93 an der ersten inneren Platte 66 an und wird durch die Federkraft der Tellerfedern in Position gehalten. In der in Figur 8 gezeigten Offenstellung, steht der erste Formeinsatz 82 leicht gegenüber der ersten inneren Platte 66 vor. Bei geschlossenem Spritzgusswerkzeug 60 wird der erste Formeinsatz 82 zurückgeschoben und somit eine saubere formschlüssige Verbindung erzielt. Der zweite Formeinsatz 86 wird durch die zweite äussere Platte 70 in der zweiten inneren Platte 68 fixiert. Der zweite innere Formeinsatz 86 weist ausserdem Einspritzkanäle 94 auf, welche den Verteilkanal 80 mit der zweiten Teilkavität 96 verbinden.

In der zweiten äusseren Platte 70 ist ein Unterdruckkanal 98 angeordnet, mittels dessen Luft aus dem geschlossenen Spritzgusswerkzeug 60, vor dem Einbringen des Spritzgutes, entfernt wird. Somit entsteht ein Unterdruck in den Kavitäten des geschlossenen Spritzgusswerkzeuges 60. Der Unterdruckkanal 98 ist mittels eines Schliessventils 100 verschliessbar, welches durch eine Spiralfeder 102 offen gehalten wird. Das gezeigte Schliessventil 100 wird durch das Spritzgut selbst, sobald dieses ins Werkzeug eingebracht wird, mittels Staudruck in Schliessstellung gebracht, so dass ein Eindringen des Spritzguts in den Unterdruckkanal 98 beim Einspritzvorgang verhindert wird. Zum Anspritzen des Aussenabschnitts 62 (vgl. Figur 10) wird der ausgestanzte Innenabschnitt 30 derart in die erste Teilkavität 84 eingelegt, dass das Anspritzende 42 in der Kavität freiliegt und der Bereich gegen das freie Ende 36 hin von der ersten Teilkavität 84 fest umschlossen ist (Figur 9). Vorzugsweise wird der Innenabschnitt 30 so eingelegt, dass auch ein an das Anspritzende 42 angrenzender, zylinderförmiger Bereich in der Kavität freiliegt, so dass der Innenabschnitt 30 nicht nur vom Anspritzende 42 her axial sondern auch im freiliegenden Bereich radial angespritzt werden kann. Nach dem Schliessen des Spritzgusswerkzeugs 60 wird das Spritzgut eingespritzt und gelangt durch den Zuführkanal 72 über den Verteilkanal 80 und die Einspritzkanäle 94 in die zweite Teilkavität 96, wo der Aussenabschnitt 62 gebildet wird. Beim Einspritzen wird das Schliessventil 100 geschlossen. Der Stopfen 12 (vgl. Figur 11) erhält durch diesen Spritzguss seine endgültige Form und kann, sobald er vulkanisiert oder mindestens teilausgehärtet ist, aus dem Spritzgusswerkzeug 60 entfernt werden. Um den Stopfen 12 aus dem Spritzgusswerkzeug 60 zu entfernen, wird vorerst die zweite innere Platte 68 und die zweite äussere Platte 70 relativ zu der ersten inneren Platte 66 und der ersten äusseren Platte 64 bewegt. In diesem Schritt löst sich der Innenabschnitt 30 beziehungsweise der teilausgehärtete fertige Stopfen 12 von dem ersten Formeinsatz 82. Anschliessend wird, mittels eines hydraulischen oder elektrischen Antriebs, die zweite innere Platte 68 von der zweiten äusseren Platte 70 getrennt beziehungsweise relativ dazu auseinander bewegt. Dadurch trennt sich das Spritzgut, welches im Verteilkanal 80 und den Einspritzkanälen 94 verblieben ist, von der zweiten äusseren Platte 70. Nun kann der Stopfen 12 von dem Spritzgut welches in den Einspritzkanälen 94 verblieben ist getrennt werden. Anschliessend wird das restliche Spritzgut mitsamt dem in dem dritten Zuführkanalabschnitt 78 verbliebenen Anguss aus dem Spritzgusswerkzeug 60 entfernt.

Figur 11 zeigt schematisch einen Schnitt durch einen Stopfen 12, der mittels des erfindungsgemässen Verfahrens hergestellt worden ist. Der Stopfen 12 weist einen Trägerkörper 104 und eine inerte Schicht 34 auf, welche den Trägerkörper 104 im Bereich des Innenabschnitts 30 überzieht. Der Innenabschnitt 30 des Stopfens 12 weist ein vom Aussenabschnitt 62 abgewandtes, freies Ende 36 auf, in welches stirnseitig eine Vertiefung 38 eingebracht ist. Zudem weist der Innenabschnitt 30 eine mantelförmige Dichtfläche 106 auf, welche an den Aussenabschnitt 62 angrenzt und vollständig mit der inerten Schicht 34 überzogen ist. Der tellerförmige Aussenabschnitt 62 weist eine Mantelfläche 108 auf, sowie eine normal dazu angeordnete, ringförmige Auflagefläche 110, welche an den Innenabschnitt 30 angrenzt. Auf der vom Innenabschnitt 30 abgewandten Seite weist der Aussenabschnitt 62 zudem eine Senke 112 auf, welche zusammen mit der Vertiefung 38 dazu dient, ein Durchstechen des Stopfens 12 mit einer Kanüle zu erleichtern.

Figur 12 zeigt schematisch einen Schnitt durch einen Stopfen 12, der auf einen Behälter 114 aufgesetzt ist. Der Behälter 114 ist mit einem Inhalt 116, insbesondere einer pharmazeutischen Zusammensetzung, befüllt und wird durch den Stopfen 12 verschlossen. Dabei liegt die ringförmige Auflagefläche 110 des Stopfens 12 auf dem oberen Rand des Behälters 114 auf, während die mantelförmige Dichtfläche 106 des Stopfens 12 an der Innenseite der Behälterwand anliegt und den Behälter abdichtet. Die inerte Schicht 34 überzieht denjenigen Bereich des Stopfens 12, der im Innern des Behälters 114 angeordnet ist, vollständig und verhindert so, dass der Inhalt 116 des Behälters 114 mit dem Material des Trägerkörpers 104 des Stopfens 12 in Kontakt kommt.

## Patentansprüche

1. Verfahren zur Herstellung eines einstückigen Stopfens (12) mit einem Trägerkörper (104) aus einem elastomeren Werkstoff und einer inerten Schicht (34), der dazu bestimmt ist, einen Behälter (114) mit einer Öffnung zu verschliessen, wobei der Trägerkörper (104) einen tellerförmigen Aussenabschnitt (62), welcher dazu bestimmt ist, an der Aussenseite des Behälters (114) aufzuliegen, und einen fest mit dem Aussenabschnitt (62) verbundenen, zapfenartig gegenüber dem Aussenabschnitt (62) vorstehenden Innenabschnitt (30) mit einem vom Aussenabschnitt (62) abgewandten freien Ende (36) aufweist, welcher dazu bestimmt ist, mit dem freien Ende (36) voran in die Öffnung des Behälters (114) eingesetzt zu werden und ins Innere des Behälters (114) hineinzuragen, und dessen Oberfläche zumindest teilweise mit der inerten Schicht (34) überzogen ist,
umfassend die Schritte
(a) Einlegen einer Platte (26) des elastomeren Werkstoffs und eines Inertfilms (28) in ein Formwerkzeug (10),
(b) Formen des Innenabschnitts (30) unter Einwirkung von Wärme, so dass der Inertfilm (28) die inerte Schicht (34) bildet und das freie Ende (36) des Innenabschnitts (30) und einen angrenzenden Bereich überzieht, wobei der elastomere Werkstoff zumindest teilweise vulkanisiert und mit dem Inertfilm (28) untrennbar verbunden wird und wobei ein Fell (32) gebildet wird,
(c) Enfernen des Fells (32) aus dem Formwerkzeug (10),
(d) Ausstanzen des Innenabschnitts (30) aus dem Fell (32), und
(e) Anbringen des Aussenabschnitts (62) in einem weiteren Werkzeug,
**dadurch gekennzeichnet, dass** zum Anbringen des Aussenabschnitts (62)
(e1) der Innenabschnitt (30) derart in eine Kavität eines Spritzgusswerkzeugs (60) eingelegt wird, dass ein dem freien Ende (36) gegenüberliegendes Anspritzende (42) in der Kavität freiliegt,
(e2) der Aussenabschnitt (62) mittels Spritzgiessen an das Anspritzende (42) des Innenabschnitts (30) angespritzt wird, wodurch der Stopfen (12) seine endgültige Form erhält, und
(e3) der ausvulkanisierte oder zumindest teilausgehärtete Stopfen (12) aus dem Spritzgusswerkzeug (60) entfernt wird.

2. Verfahren nach Anspruch 1, **dadurch gekennzeichnet, dass** als elastomerer Werkstoff Brombutyl-Kautschuk, Nitrilkautschuk oder Ethylen-Propylen-Dien-Kautschuk verwendet wird.

3. Verfahren nach Anspruch 1 oder 2, **dadurch gekennzeichnet, dass** als Inertfilm (28) ein fluorierter Polymerfilm, insbesondere ein Teflonfilm, verwendet wird.

4. Verfahren nach einem der Ansprüche 1 bis 3, **dadurch gekennzeichnet, dass** in Schritt (b) die inerte Schicht (34) derart geformt wird, dass sie die Aussenfläche des beim fertigen Stopfen (12) gegenüber dem Aussenabschnitt (62) vorstehenden Innenabschnitts (30) vollständig überzieht.

5. Verfahren nach einem der Ansprüche 1 bis 4, **dadurch gekennzeichnet, dass** in Schritt (b) an einer am freien Ende des Innenabschnitts (30) liegenden Stirnseite (40) eine Vertiefung ausgebildet wird.

6. Verfahren nach einem der Ansprüche 1 bis 5, **dadurch gekennzeichnet, dass** in Schritt (b) in einer am Anspritzende (42) des Innenabschnitts (30) liegenden, stirnseitigen Endfläche eine zur Endfläche hin offene, umlaufende Ringnut (44) gebildet wird.

7. Verfahren nach einem der Ansprüche 1 bis 6, **dadurch gekennzeichnet, dass** der Innenabschnitt (30) in Schritt (e1) derart in die Kavität des Spritzgusswerkzeugs (60) eingelegt wird, dass ein an das Anspritzende (42) angrenzender, mantelseitiger Bereich freiliegt.

8. Verfahren nach einem der Ansprüche 1 bis 6, **dadurch gekennzeichnet, dass** in Schritt (e1) der Innenabschnitt (30) derart in die Kavität des Spritzgusswerkzeugs (60) eingelegt wird, dass nur derjenige Bereich am Anspritzende (42) des Innenabschnitts (30) freiliegt, frei von der inerten Schicht (34) ist.

9. Verfahren nach einem der Ansprüche 1 bis 8, **dadurch gekennzeichnet, dass** im Spritzgusswerkzeug (60) vor dem Anspritzen des Aussenabschnitts ein Unterdruck produziert wird.
